Europäisches Patentamt

European Patent Office

Office européen des brevets

(11) Veröffentlichungsnummer: **0 463 350 A2**

# (12) EUROPÄISCHE PATENTANMELDUNG

(21) Anmeldenummer: **91107997.8**

(22) Anmeldetag: **17.05.91**

(51) Int. Cl.⁵: **B60G 17/015**

(30) Priorität: **19.06.90 DE 4019463**

(43) Veröffentlichungstag der Anmeldung:
**02.01.92 Patentblatt 92/01**

(84) Benannte Vertragsstaaten:
**DE ES FR GB**

(71) Anmelder: **ROBERT BOSCH GmbH**
**Postfach 10 60 50**
**W-7000 Stuttgart 10(DE)**

(72) Erfinder: **Schramm, Wolfgang, Dr.**
**Kuenzenstrasse 31**
**W-7250 Leonberg-Warmbronn(DE)**
Erfinder: **Schunck, Eberhardt, Dipl.-Phys.**
**Eichbornstrasse 11**
**W-6740 Landau(DE)**
Erfinder: **Berner, Andreas, Dipl.-Ing. (FH)**
**Esslinger Strasse 192**
**W-7310 Plochingen(DE)**
Erfinder: **Bayer, Stefan, Dipl.-Ing.**
**Hohe Strasse 31**
**W-7257 Ditzingen-Hirschlanden(DE)**

(54) **Federbein mit einem Arbeitszylinder.**

(57) Bei dem vorgeschlagenen Federbein ist ein Schiebeteil (40) vorgesehen. Beim Einfahrhub ist eine erste Schleife (84), welche über das Schiebeteil (40) verläuft, elektrisch geschlossen und eine zweite elektrische Schleife (86) ist unterbrochen. Beim Ausfahrhub ist die zweite elektrische Schleife (86) über das Schiebeteil (40) geschlossen und die erste Schleife (84) ist geöffnet. Damit kann auf einfache und leichte Weise mit Hilfe einer elektrischen Schaltung (70) erkannt werden, ob der Arbeitszylinder (4) im Einfahr- oder Ausfahrhub arbeitet.

Das Federbein ist insbesondere für Kraftfahrzeuge bestimmt.

FIG.3

EP 0 463 350 A2

Stand der Technik

Die Erfindung betrifft ein Federbein mit einem Arbeitszylinder zur Abstützung eines Fahrzeugaufbaus nach der Gattung des Hauptanspruchs. Es ist bereits ein Arbeitszylinder bekannt, bei dem zur Unterscheidung zwischen einem Einfahrhub und einem Ausfahrhub ein Meßsystem mit zwei Hall-Generatoren oder mit zwei Hall-Sensoren vorgesehen ist. Die zwei Hall-Generatoren bzw. die zwei Hall-Sensoren sind bei diesem Arbeitszylinder um 90° versetzt angeordnet.

Der Arbeitszylinder umfaßt eine Kolbenstange und ein Zylinderrohr mit einer Meßstrecke am Zylinderrohr. Die Hall-Sensoren sind an der Kolbenstange angeordnet, und die Meßstrecke hat die Form eines Trapezgewindes. Durch Bewegen der Sensoren entlang der Meßstrecke ergibt sich je Sensor ein Signal anhand dessen eine Elektronik die Richtung der relativen Bewegung ermitteln kann.

Die Elektronik, die beiden Sensoren sowie die trapezartige Meßstrecke erfordern einen relativ hohen Fertigungsaufwand und macht sich als hohe Herstellkosten bemerkbar. Die nicht gerade einfache Elektronik hat zur Folge, daß auch mit nicht gerade niedrigen Ausfallraten gerechnet werden muß.

Vorteile der Erfindung

Das Federbein mit den kennzeichnenden Merkmalen des Hauptanspruchs hat demgegenüber den Vorteil, daß mit einer sehr einfachen und zuverlässigen elektrischen Schaltung die Relativbewegung der beiden gegeneinander verschiebbaren Zylindergruppen ermittelt werden kann.

Umfaßt das Schiebeteil einen Gleitkörper und einen Spannkörper, wobei der Spannkörper den Gleitkörper gegen die Zylindergruppe, auf der das Schiebeteil reibungsbehaftet verschiebbar gelagert ist, vorspannt, so wird in vorteilhafter Weise eine weitgehend temperaturunabhängige und verschleißunabhängige Reibung zwischen dem Schiebeteil und der Zylindergruppe erreicht.

Ist der Spannkörper ein Sprengring, so hat dies den Vorteil, daß als Spannkörper ein jederzeit verfügbares, einfaches Normteil verwendet werden kann.

Wird über einen Abstand zwischen dem Schiebeteil und einer der Anschlagstellen des Schiebeteils eine Verbindung zwischen Räumen beeinflußt, so können die Drücke in diesen Räumen bzw. eine Strömung zwischen diesen Räumen beeinflußt werden.

Zeichnung

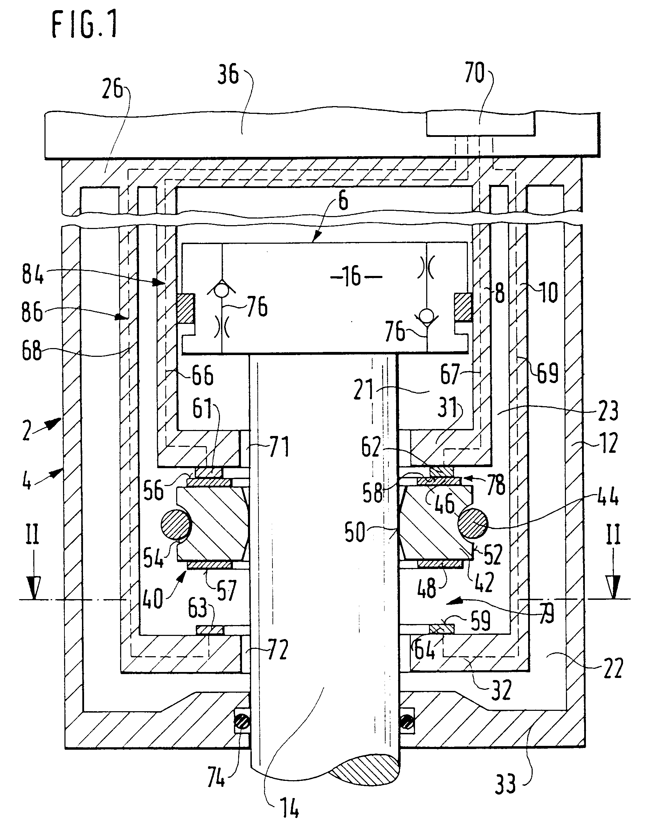

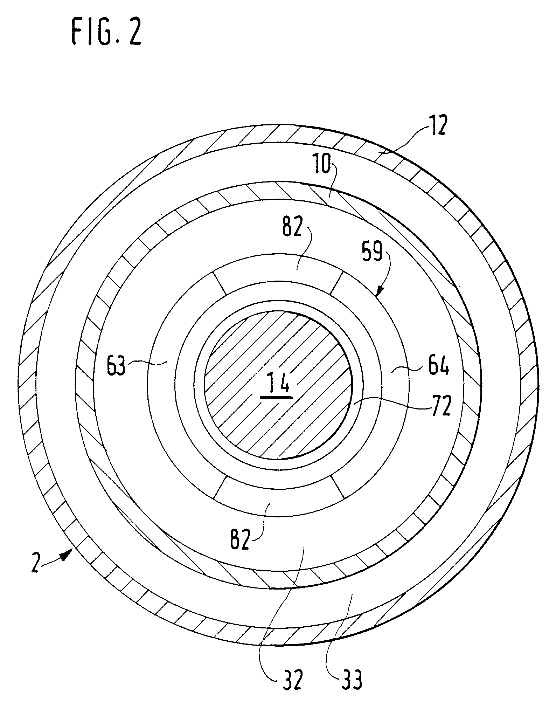

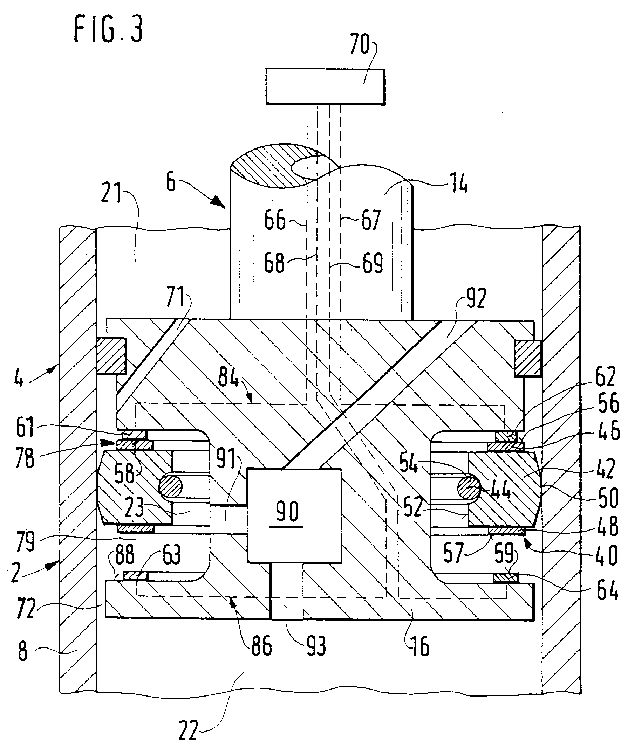

Zwei Ausführungsbeispiele der Erfindung sind in der Zeichnung vereinfacht dargestellt und in der nachfolgenden Beschreibung näher erläutert. Es zeigen die Figuren 1 und 3 je ein Ausführungsbeispiel und die Figur 2 einen Blick auf eine in Figur 1 mit II-II gekennzeichnete Schnittebene.

Beschreibung der Ausführungsbeispiele

Ein Kraftfahrzeug hat üblicherweise zur Abstützung seines Fahrzeugaufbaus zwischen dem Fahrzeugaufbau und seinen Radachsen bzw. seinen Radträgern Federbeine. Ein Federbein eines Fahrzeuges umfaßt häufig einen Arbeitszylinder. Der Arbeitszylinder kann zum Beispiel ein Hubzylinder, ein Stoßdämpfer oder eine Kombination aus Hubzylinder und Stoßdämpfer sein. Neben diesem Arbeitszylinder kann das Federbein zum Beispiel auch noch zusätzliche Federelemente enthalten.

Die Figur 1 zeigt einen Arbeitszylinder 2 eines Federbeines. Der Arbeitszylinder 2 kann, zwecks einfacher Betrachtung, in eine erste Zylindergruppe 4 und in eine zweite Zylindergruppe 6 unterteilt werden. In dem dargestellten Ausführungsbeispiel umfaßt die erste Zylindergruppe 4 im wesentlichen ein inneres Zylinderrohr 8, ein mittleres Zylinderrohr 10 und ein äußeres Zylinderrohr 12. Die zweite Zylindergruppe 6 umfaßt im wesentlichen eine Kolbenstange 14 und einen Kolben 16.

Innerhalb des inneren Zylinderrohres 8 bildet sich ein erster Druckraum 21. Zwischen dem mittleren Zylinderrohr 10 und dem äußeren Zylinderrohr 12 wird ein zweiter Druckraum 22 gebildet. Zwischen dem inneren Zylinderrohr 8 und dem mittleren Zylinderrohr 10 bildet sich ein dritter Druckraum 23. Die drei Druckräume 21, 22, 23 werden in axialer Richtung auf einer Seite durch eine gemeinsame obere Stirnseite 26 abgeschlossen. In axialer Richtung auf der anderen Seite trennt eine erste Stirnseite 31 den ersten Druckraum 21 von dem dritten Druckraum 23; eine zweite Stirnseite 32 trennt den zweiten Druckraum 22 von dem dritten Druckraum 23; eine dritte Stirnseite 33 schließt den zweiten Druckraum 22 nach außen hin ab.

Der Kolben 16 ist innerhalb des ersten Druckraumes 21 axial verschiebbar gelagert. Die Kolbenstange 14 ist mit dem Kolben 16 verbunden. Die Kolbenstange 14 führt aus dem ersten Druckraum 21 durch die erste Stirnseite 31, durch den dritten Druckraum 23, durch die zweite Stirnseite 32, durch den zweiten Druckraum 22 und durch die dritte Stirnseite 33 aus der ersten Zylindergruppe 4 heraus. Die Kolbenstange 14 ist an ihrem aus der ersten Zylindergruppe 4 herausführenden Ende mit einer nicht dargestellten Fahrzeugachse bzw. mit einem nicht dargestellten Radträger verbunden. Die obere Stirnseite 26 der ersten Zylindergruppe 4 ist mit einem Fahrzeugaufbau 36 gekoppelt. Auf der Kolbenstange 14 und damit an der zweiten Zylindergruppe 6 ist ein Schiebeteil 40 axial verschiebbar gelagert.

Bei dem dargestellten, erfindungsgemäßen Ausführungsbeispiel umfaßt das Schiebeteil 40 einen Gleitkörper 42, einen Spannkörper 44, einen ersten elektrischen Leiter 46 und einen zweiten elektrischen Leiter 48.

Der Gleitkörper 42 umgibt ringförmig die Kolbenstange 14. Der Gleitkörper 42 hat eine Gleitfläche 50 und eine Mantelfläche 52. Die Gleitfläche 50 des Gleitkörpers 42 liegt am zylindrischen Außenmantel der Kolbenstange 14 an. Der Spannkörper 44 ist an der Mantelfläche 52 des Gleitkörpers 42 angeordnet. Der Spannkörper 44 drückt auf den Gleitkörper 42 in radialer Richtung und sorgt damit für eine Pressung zwischen dem Gleitkörper 42 und der Kolbenstange 14 bzw. der Spannkörper 44 unterstützt eine Pressung zwischen dem Gleitkörper 42 und der Kolbenstange 14. Damit der Spannkörper 44 von der Mantelfläche 52 des Gleitkörpers 42 nicht herabrutschen kann, ist die Mantelfläche 52 mit einem umlaufenden Nuteinstich 54 versehen, in den der Spannkörper 44 eingelegt ist. In axialer Richtung wird das Schiebeteil 40 einerseits durch eine erste Stirnseite 56 und andererseits durch eine zweite Stirnseite 57 abgeschlossen. An der ersten Stirnseite 31 des inneren Zylinderrohres 8 ist für das Schiebeteil 40 eine erste Anschlagstelle 58 und an der zweiten Stirnseite 32 des mittleren Zylinderrohres 10 ist eine zweite Anschlagstelle 59 für das Schiebeteil 40 vorgesehen.

Die erste Anschlagstelle 58 setzt sich im wesentlichen aus einem ersten elektrischen Kontakt 61 und einem zweiten elektrischen Kontakt 62 zusammen. Die zweite Anschlagstelle 59 umfaßt einen dritten elektrischen Kontakt 63 und einen vierten elektrischen Kontakt 64. Der erste elektrische Kontakt 61 ist über eine erste elektrische Leitung 66, der zweite elektrische Kontakt 62 über eine zweite elektrische Leitung 67, der dritte elektrische Kontakt 63 über eine dritte elektrische Leitung 68 und der vierte elektrische Kontakt 64 ist über eine vierte elektrische Leitung 69 mit einer elektrischen Schaltung 70 verbunden. Die Leitungen 66, 67, 68, 69 sind in der Zeichnung gestrichelt dargestellt.

Zwischen der ersten Stirnseite 31 und der Kolbenstange 14 besteht ein Spiel, das einen ersten Durchlaß 71 bildet, durch den eine erste Verbindung zwischen dem ersten Druckraum 21 und dem dritten Druckraum 23 verlaufen kann. Zwischen der zweiten Stirnseite 32 und der Kolbenstange 14 besteht ein Spiel, welches einen zweiten Durchlaß 72 darstellt, durch den eine zweite Verbindung zwischen dem zweiten Druckraum 22 und dem dritten Druckraum 23 verlaufen kann. Zwischen der dritten Stirnseite 33 und der Kolbenstange 14 ist ein Dichtring 74 in eine Nut eingelegt. Der Dichtring 74 sorgt für eine Abdichtung des zweiten Druckraumes 22 nach außen hin.

Je nach Art des Arbeitszylinders 2 kann durch den Kolben 16 eine Strömungsverbindung 76 oder mehrere Strömungsverbindungen 76 hindurchführen. Die Strömungsverbindung 76 enthält zum Beispiel eine Drosselstelle und/oder ein Rückschlagventil.

Das Schiebeteil 40 befindet sich zwischen der ersten Anschlagstelle 58 und der zweiten Anschlagstelle 59. In axialer Richtung ist das Schiebeteil 40 kürzer als ein Abstand zwischen den beiden Anschlagstellen 58, 59, so daß das Schiebeteil 40 entweder mit seiner ersten Stirnseite 56 an der ersten Anschlagstelle 58 oder mit der zweiten Stirnseite 57 an der zweiten Anschlagstelle 59 anliegen kann oder aber das Schiebeteil 40 berührt keine der beiden Anschlagstellen 58, 59.

Zwischen der ersten Stirnseite 56 des Schiebeteils 40 und der Anschlagstelle 58 der ersten Zylindergruppe 4 gibt es einen mehr oder weniger großen ersten Abstand 78, und zwischen der zweiten StirnSeite 57 des Schiebeteils 40 und der zweiten Anschlagstelle 59 der ersten Zylindergruppe 4 gibt es einen mehr oder weniger großen zweiten Abstand 79. In der Zeichnung ist das Schiebeteil 40 so dargestellt, daß die erste Stirnseite 56 die erste Anschlagstelle 58 berührt, weshalb der erste Abstand 78 in der Zeichnung Null ist.

Je nach Verschiebung der beiden Zylindergruppen 4, 6 gegeneinander vergrößert bzw. verkleinert sich der erste Abstand 78. Werden die beiden Zylindergruppen 4, 6 so gegeneinander verschoben, daß sich der erste Abstand 78 vergrößert, so verkleinert sich gleichzeitig der zweite Abstand 79; umgekehrt ist es entsprechend.

Ausgehend von der in der Figur 1 dargestellten Lage des Schiebeteils 40, verkleinert sich bei einem Ausfahrhub zunächst der zweite Abstand 79 zwischen der zweiten Stirnseite 57 und der zweiten Anschlagstelle 59. Nach Überwindung des Abstandes 79 kommt die zweite Stirnseite 57 des Schiebeteils 40 an der zweiten Anschlagstelle 59 der zweiten Zylindergruppe 6 zur Anlage. Wird in dieser Stellung des Schiebeteils 40 der Ausfahrhub fortgesetzt, so liegt die zweite Stirnseite 57 weiterhin an der zweiten Anschlagstelle 59 an und das Schiebeteil 40 gleitet entlang der Kolbenstange 14. Bei einem Einfahrhub kommt die erste Stirnseite 56 nach Überwindung des ersten Abstandes 78 an der ersten Anschlagstelle 58 zur Anlage. Wird darüberhinaus der Einfahrhub fortgesetzt, so wird das Schiebeteil 40 von der ersten Anschlagstelle 58 zurückgehalten und das Schiebeteil 40 gleitet entlang der Kolbenstange 14. Die Summe der beiden Abstände 78, 79 ist kleiner als der maximale Arbeitsweg der beiden Zylindergruppen 4, 6 relativ zueinander. Diese Summe ist vorzugsweise um ein Vielfaches kleiner als der maximal mögliche Arbeitsweg.

Die radiale Pressung zwischen dem Schiebeteil 40 und der Kolbenstange 14 ist zweckmäßigerweise so eingestellt, daß, wenn das Schiebeteil 40 von einer der Anschlagstellen 58, 59 zurückgehalten wird, die Verschiebung der beiden Zylindergruppen 4, 6 gegeneinander nicht wesentlich behindert wird. Die Reibung zwischen dem Schiebeteil 40 und der Kolbenstange 14 sollte aber auch mindestens so groß sein, daß zum Beispiel Erschütterungen nicht zu einem ungewollten Verschieben des Schiebeteils 40 führen.

Die zweite Anschlagstelle 59 umgibt ringförmig die Kolbenstange 14, wie es insbesondere in Figur 2 deutlich erkennbar dargestellt ist. Die Figur 2 zeigt einen Schnitt durch den Arbeitszylinder 2 entlang der in Figur 1 dargestellten und mit II-II gekennzeichneten Linie. In allen Figuren sind gleiche oder gleichwirkende Teile mit denselben Bezugszeichen versehen.

Der dritte elektrische Kontakt 63 und der vierte elektrische Kontakt 64 erstrecken sich, wie in Figur 2 dargestellt, in Umfangsrichtung entlang der zweiten Anschlagstelle 59, sind jedoch über Trennstücke 82 voneinander elektrisch getrennt. Die zweite Stirnseite 57 befindet sich an dem zweiten elektrischen Leiter 48 des Schiebeteils 40. Liegt das Schiebeteil 40 mit der Stirnseite 57 an der Anschlagstelle 59 an, so ist eine zweite elektrische Schleife 86, ausgehend von der elektrischen Schaltung 70, durch die dritte elektrische Leitung 68, durch den Kontakt 63, durch den elektrischen Leiter 48 des Schiebeteils 40, durch den Kontakt 64 und durch die vierte elektrische Leitung 69 zurück in die Schaltung 70 geschlossen. Liegt das Schiebeteil 40 nicht an der Anschlagstelle 59 an, so ist diese zweite Schleife 86 unterbrochen. Damit kann die elektrische Schaltung 70 erkennen, ob das Schiebeteil 40 an der Anschlagstelle 59 anliegt oder nicht. Auch die erste Anschlagstelle 58 mit den Kontakten 61, 62 ist entsprechend der soeben beschriebenen zweiten Anschlagstelle 59 ausgebildet. Auch bei der ersten Anschlagstelle 58 sind die Kontakte 61, 62 durch Trennstücke 82 gegenseitig elektrisch isoliert. Liegt das Schiebeteil 40 an der ersten Anschlagstelle 58 an, so besteht eine erste elektrische, geschlossene Schleife 84, ausgehend von der Schaltung 70 durch die Leitung 66, den ersten elektrischen Kontakt 61, den elektrischen Leiter 46 und die elektrische Leitung 67 zurück in die Schaltung 70. Liegt das Schiebeteil 40 nicht an der ersten Anschlagstelle 58 an, so ist diese erste Schleife 84 unterbrochen. Damit kann die elektrische Schaltung 70 erkennen, ob das Schiebeteil 40 an der ersten Anschlagstelle 58 anliegt oder nicht.

Ist die erste elektrische Schleife 84 geschlossen, so erkennt die elektrische Schaltung 70, daß der Arbeitszylinder 2 im Einfahrhub arbeitet bzw. zuletzt gearbeitet hat. Ist die zweite elektrische Schleife 86 geschlossen, dann erkennt die elektrische Schaltung 70, daß der Arbeitszylinder 2 im Ausfahrhub arbeitet bzw. zuletzt gearbeitet hat. Den Abstand zwischen den beiden Anschlagstellen 58, 59 kann man so wählen, daß das Schiebeteil 40 sich zwischen den beiden Anschlagstellen 58, 59 nur über eine kurze Wegstrecke hin und her bewegen kann. Diese Wegstrecke kann zum Beispiel nur wenige Zentimeter, Millimeter oder auch nur wenige Millimeterbruchteile sein; die freie Wegstrecke beträgt vorzugsweise zum Beispiel 0,3 mm.

Ist die freie Wegstrecke für das Schiebeteil 40 sehr klein, dann wird schon frühzeitig nach Beginn eines Einfahrhubs bzw. Ausfahrhubs die erste Schleife 84 bzw. die zweite Schleife 86 geschlossen. Für den Gleitkörper 42 wählt man zum Beispiel einen Werkstoff, welcher bei der Verschiebung auf der Kolbenstange 14 einen geringen Reibwert und/oder geringen Verschleiß besitzt. Dies kann vorzugsweise zum Beispiel ein PTFE-Werkstoff sein. Ein weicher Werkstoff für den Gleitkörper 42, wie es z. B. bei fast allen Kunststoffen und bei Buntmetallen der Fall ist, ist günstig, weil damit die Kolbenstange 14 nicht beschädigt wird. Ist der Gleitkörper 42 aus einem elektrisch leitenden Material, so kann auf die zusätzlichen elektrischen Leiter 46, 48 verzichtet werden und die Stirnseiten 56, 57 werden direkt auf dem Gleitkörper 42 gebildet. Wird der Gleitkorper 42 mit Vorspannung auf die Kolbenstange 14 gepreßt, so kann prinzipiell auch auf den Spannkörper 44 verzichtet werden. Da der für den Gleitkörper 42 vorzugsweise verwendete Werkstoff einen anderen Wärmeausdehnungskoeffizient hat als die Kolbenstange 14, ist ohne den Spannkörper 44 bei unterschiedlichen Temperaturen die radiale Pressung zwischen dem Gleitkörper 42 und der Kolbenstange 14 verschieden, weshalb es besonders vorteilhaft ist, den Gleitkörper 42 mit dem Spannkörper 44 in Richtung der Oberfläche der Kolbenstange 14 zu pressen. Die Temperatur des Gleitkörpers 42 hängt im wesentlichen von der Temperatur eines Druckmediums in dem Arbeitszylinder 2 und, wegen Reibungswärme, von der Geschwindigkeit, mit der die beiden Zylindergruppen 4, 6 gegeneinander bewegt werden, ab. Der Spannkörper 44 ist vorzugsweise ein so gut wie überall verfügbarer, genormter Sprengring. Derartige Sprengringe bestehen aus einem Federstahl und sind z. B. in der Bundesrepublik Deutschland in der DIN 7993 und in der DIN 9045 genormt. In den beiden DIN gibt es den Hinweis, daß Sprengringe im englischen Sprachgebrauch Snap rings genannt werden. Der Spannkörper 44 besteht vorzugsweise aus einem Runddraht und erstreckt sich über einen Winkel zwischen etwa 200° bis fast 360° über den Umfang der Mantelfläche 52 innerhalb des Nuteinstichs 54. Für den Spannkörper 44 und für den Nuteinstich 54 können die in der DIN 7993 und der DIN 9045 angegebenen Maße gewählt werden. Mit Hilfe des Spannkörpers 44 kann in besonders vorteilhafter Weise für eine fast gleichbleibende, temperaturunabhängige und verschleißunabhängige Pressung zwischen dem Gleitkörper 42 und der Kolbenstange 14 gesorgt werden. Damit bleibt auch die Reibung zwischen dem Gleitkörper 42 und der zweiten Zylindergruppe 6 vorteilhafterweise weitgehend kostant.

Die erste Anschlagstelle 58 verläuft entlang den Kontakten 61, 62 und den Trennstücken 82 und bildet somit einen ringförmigen, in axialer Richtung sich erstreckenden Wulst. Entsprechend ist es mit der zweiten Anschlagstelle 59. Liegt, während eines Einfahrhubes, das Schiebeteil 40 mit seiner ersten Stirnseite 56 an der ersten Anschlagstelle 58 an, so ist der dritte Druckraum 23 von dem ersten Druckraum 21 getrennt, jedoch es ist der dritte Druckraum 23 mit dem zweiten Druckraum 22 über die zweite Verbindung durch den Durchlaß 72 verbunden. Befindet sich jedoch, beim Ausfahrhub, das Schiebeteil 40 mit seiner zweiten Stirnseite 57 an der zweiten Anschlagstelle 59, so ist der dritte Druckraum 23 von dem zweiten Druckraum 22 entkoppelt, jedoch es ist der dritte Druckraum 23 über die erste Verbindung mit dem ersten Druckraum 21 verbunden. Somit kann mit Hilfe des Schiebeteils 40 nicht nur ein Schaltzustand der elektrischen Schaltung 70 gesteuert werden, sondern es kann vorteilhafterweise zusätzlich auch ein Druck z. B. in dem dritten Druckraum 23 mit Hilfe des Schiebeteils 40 gesteuert werden. Der Druck in dem dritten Druckraum 23 kann wiederum zur Steuerung verschiedener, in der Figur 1 nicht dargestellter Ventile verwendet werden. Der Druck in dem dritten Druckraum 23 kann zum Beispiel ein Vorsteuerdruck eines weiteren Ventils sein oder es kann zum Beispiel mit Hilfe eines Drucksensors die Bewegungsrichtung der Kolbenstange 14 ermittelt werden usw.

Die Figur 3 zeigt das zweite Ausführungsbeispiel. Beim ersten Ausführungsbeispiel nach Figur 1 sind die Anschlagstellen 58, 59 Bestandteil der ersten Zylindergruppe 4, und das Schiebeteil 40 wird von der zweiten Zylindergruppe 6 mitgeschleppt bzw. es kann an der zweiten Zylindergruppe 6 gleiten. Bei dem zweiten Ausführungsbeispiel nach Figur 3 jedoch sind die Anschlagstellen 58, 59 Bestandteil des Kolbens 16 und damit Bestandteil der zweiten Zylindergruppe 6 und das Schiebeteil 40 wird von dem Zylinderrohr 8 und damit von der ersten Zylindergruppe 4 mitgeschleppt bzw. das Schiebeteil 40 kann entlang einem Innenmantel des Zylinderrohres 8 und damit entlang der ersten Zylindergruppe 4 gleiten, nachdem es an den Anschlagstellen 58, 59 der zweiten Zylindergruppe 6 zur Anlage gekommen ist. Beim zweiten Ausführungsbeispiel spannt der Spannkörper 44 den Gleitkörper 42 radial nach außen gegen den inneren Zylindermantel des Zylinderrohres 8. In beiden Ausführungsbeispielen kann über die Kontakte bzw. über den Schaltzustand der Schleifen 84, 86 erkannt werden, ob der Arbeitszylinder 2 im Einfahrhub oder Ausfahrhub arbeitet.

Im zweiten Ausführungsbeispiel nach Figur 3 befindet sich der erste Druckraum 21 oberhalb des Kolbens 16 und der zweite Druckraum 22 unterhalb des Kolbens 16. In Figur 3 befindet sich das ringförmige Schiebeteil 40 mindestens teilweise innerhalb eines am Außenmantel des Kolbens 16 vorgesehenen Einstichs 88. Zwischen dem Schiebeteil 40 und dem Kolben 16 bildet sich ein Hohlraum, der dem dritten Druckraum 23 entspricht. Der dritte Druckraum 23 ist mit einem Ventil 90 über einen ersten Kanal 91 verbunden. Das Ventil 90 ist über einen zweiten Kanal 92 noch mit dem ersten Druckraum 21 und über einen dritten Kanal 93 auch noch mit dem zweiten Druckraum 22 verbunden.

Bei einem Ausfahrhub ist im zweiten Ausführungsbeispiel der erste Druckraum 21 über die erste Verbindung mit dem ersten Durchlaß 71 und dem ersten Abstand 78 mit dem dritten Druckraum 23 verbunden. Bei einem Einfahrhub ist der zweite Druckraum 22 über die zweite Verbindung mit dem zweiten Durchlaß 72 und dem zweiten Abstand 79 mit dem dritten Druckraum 23 verbunden. Der Druck in dem dritten Druckraum 23 kann zum Beispiel als Vorsteuerdruck zur Steuerung des Ventils 90 verwendet werden. Das Ventil 90 steuert wiederum zum Beispiel eine Strömung zwischen dem ersten Druckraum 21 und dem zweiten Druckraum 22. Ist der Arbeitszylinder 2 zum Beispiel ein Stoßdämpfer, so kann mit Hilfe des Drucks in dem dritten Druckraum 23 beispielsweise die Strömung zwischen den beiden Druckräumen 21, 22 und damit die Dämpferkraft des Stoßdämpfers in Abhängigkeit davon ob der Stoßdämpfer gerade im Einfahrhub oder im Ausfahrhub arbeitet, beeinflußt werden.

Bei den beschriebenen Ausführungsbeispielen sind zur Erfassung des Einfahr- und Ausfahrhubes die beiden elektrischen Schleifen 84, 86 vorgesehen. In einer vereinfachten Ausführungsform des erfindungsgemäßen Federbeines kann auch auf eine der beiden elektrischen Schleifen 84 bzw. 86 verzichtet werden. Ist zum Beispiel nur die erste elektrische Schleife 84 vorgesehen, so besagt die elektrisch geschlossene Schleife 84 beim ersten Ausführungsbeispiel nach Figur 1, daß der Arbeitszylinder 2 entweder im Anfahrhub arbeitet oder zuletzt gearbeitet hat. Ist die erste elektrische Schleife 84 hingegen geöffnet, so besagt dies, daß der Arbeitszylinder 2 im Ausfahrhub arbeitet bzw. zuletzt gearbeitet hat. Beim zweiten Ausführungsbeispiel nach Figur 3 ist es entsprechend. Ist hier zum Beispiel nur die erste elektrische Schleife 84 vorhanden, so bedeutet die geschlossene elektrische Schleife 84, daß der Arbeitszylinder 2 im Einfahrhub arbeitet bzw. zuletzt gearbeitet hat und ist die elektrische Schleife 84 elektrisch unterbrochen, so bedeutet dies, daß der Arbeitszylinder 2 im Ausfahrhub arbeitet bzw. zuletzt gearbeitet hat.

Sind in dem Arbeitszylinder 2 beide Schleifen 84, 86 vorgesehen, so bedeutet dies eine zusätzliche Sicherheit. Falls die elektrische Schaltung 70 feststellen sollte, daß beide elektrische Schleifen 84, 86 geschlossen bzw. längere Zeit geöffnet sein sollten, so kann sie erkennen, daß mit hoher Wahrscheinlichkeit in dem System ein Fehler vorliegt und gegebenenfalls ein entsprechendes Warnsignal abgeben.

Soll bei dem erfindungsgemäßen Federbein mit Hilfe des Schiebeteils 40 nur die erste Verbindung zwischen dem ersten Druckraum 21 und dem dritten Druckraum 23 gesteuert werden, so kann auf den zweiten Durchlaß 72 verzichtet werden. Soll aber mit Hilfe des Schiebeteils 40 nur die Verbindung zwischen dem zweiten Druckraum 22 und dem dritten Druckraum 23 gesteuert werden, so kann auf den ersten Durchlaß 71 verzichtet werden. Ist eine Steuerung einer Verbindung zwischen Druckräumen mit Hilfe des Schiebeteils 40 nicht vorgesehen, so kann auf beide Durchlässe 71, 72 verzichtet werden bzw. das Schiebeteil 40 kann z. B. direkt innerhalb des ersten oder zweiten Druckraumes 21, 22 arbeiten.

Anstatt der beiden elektrischen Kontakte 61, 62 an der ersten Anschlagstelle 58 kann zum Beispiel auch ein Drucktaster an der ersten Anschlagstelle 58 vorgesehen sein. Der Drucktaster oder ein sonstiger elektrischer Schalter kann zum Beispiel so angeordnet sein, daß bei dem in Figur 1 gezeigten Ausführungsbeispiel bei einem Ausfahrhub das Schiebeteil 40 auf diesen Drucktaster drückt und damit die elektrische Schleife 84 wahlweise öffnet oder schließt. Der Drucktaster oder ein sonstiger Schalter bietet den Vorteil, daß er abgedichtet sein kann und somit mit dem Druckmedium nicht in Berührung kommt. Dies ist insbesondere bei elektrisch leitenden Druckmedien von erheblichem Vorteil. Auch an der zweiten Anschlagstelle 59 kann ein Drucktaster oder ein sonstiger Schalter eingebaut sein. Es kann auch anstatt dem Drucktaster oder dem Schalter ein Näherungsschalter an den Anschlagstellen 58, 59 vorgesehen sein, welcher bei Annäherung des Schiebeteils 40 ein entsprechendes Signal an die elektrische Schaltung 70 weiterleitet.

Der Arbeitszylinder 2 des erfindungsgemäß ausgebildeten Federbeines kann zum Beispiel ein Stoßdämpfer, insbesondere ein Einrohrstoßdämpfer oder ein Zweirohrstoßdämpfer, ein Hubzylinder oder dergleichen sein. Das Druckmedium in dem Arbeitszylinder 2 kann eine Flüssigkeit oder ein Gas sein. Der Arbeitszylinder 2 kann zum Beispiel auch ein Plungerzylinder sein, wobei in das Innere des Arbeitszylinder 2 eine Kolbenstange eintaucht, an der kein Kolben vorgesehen ist. Der Arbeitszylinder 2 kann aber auch ein sogenannter kolbenstangenloser Arbeitszylinder sein, in dem sich zum Beispiel innerhalb des Zylinders der Kolben bewegt, dessen Bewegung durch einen seitlichen Schlitz nach außen geleitet wird.

**Patentansprüche**

1. Federbein mit einem, zwei gegeneinander verschiebbare Zylindergruppen umfassenden Arbeitszylinder zur Abstützung eines Fahrzeugaufbaus, und mit einer Einrichtung zur Erfassung einer Bewegungsrichtung der einen Zylindergruppe relativ zu der anderen Zylindergruppe, dadurch gekennzeichnet, daß ein an einer der Zylindergruppen (4, 6) reibungsbehaftet verschiebbares Schiebeteil (40) gelagert ist und die jeweils andere Zylindergruppe (4, 6) zwei Anschlagstellen (58, 59) umfaßt, wobei das Schiebeteil (40), je nach relativer Bewegungsrichtung der beiden Zylindergruppen (4, 6) zueinander, an einer der beiden Anschlagstellen (58, 59), nach Überwinden eines Spieles zwischen dem Schiebeteil (40) und der jeweiligen Anschlagstelle (58 59), zur Anlage kommen kann, wobei das Spiel kleiner ist als der maximal mögliche Arbeitsweg der beiden Zylindergruppen (4, 6) zueinander und wobei sich aus der Stellung des Schiebeteils (40) bezüglich mindestens einer der beiden Anschlagstellen (58, 59) mindestens ein elektrisches Signal ergibt.

2. Federbein nach Anspruch 1, dadurch gekennzeichnet, daß sich aus der Stellung des Schiebeteils (40) bezüglich beider Anschlagstellen (58, 59) elektrische Signale ergeben.

3. Federbein nach Anspruch 1 oder 2, dadurch gekennzeichnet, daß mindestens eine der Anschlagstellen (58, 59) zwei in Richtung des Schiebeteils (40) weisende elektrische Kontakte (61 und 62 bzw. 63 und 64) umfaßt und das Schiebeteil (40) mindestens einen elektrischen Leiter (46, 48) enthält, wobei bei Anlage des Schiebeteils (40) an dieser Anschlagstelle (58, 59) die beiden Kontakte über den elektrischen Leiter (46, 48) elektrisch verbunden sind.

4. Federbein nach einem der vorhergehenden Ansprüche, dadurch gekennzeichnet, daß mindestens eine der Anschlagstellen einen über das Schiebeteil (40) betätigbaren Schalter umfaßt.

5. Federbein nach Anspruch 4, dadurch gekennzeichnet, daß der Schalter ein Näherungsschalter ist.

6. Federbein nach einem der vorhergehenden Ansprüche, dadurch gekennzeichnet, daß das Schiebeteil (40) mindestens einen Gleitkorper (42) und einen den Gleitkörper (42) gegen eine der Zylindergruppen (4, 6) vorspannenden Spannkörper (44) umfaßt.

7. Federbein nach Anspruch 6, dadurch gekennzeichnet, daß der Spannkörper (44) ein Sprengring ist.

8. Federbein nach einem der vorhergehenden Ansprüche, dadurch gekennzeichnet, daß mindestens ein erster Abstand (78, 79) zwischen dem Schiebeteil (40) und mindestens einer der Anschlagstellen (58, 59) mindestens eine erste Verbindung zwischen mindestens zwei Druckraumen (21 und 23 bzw. 22 und 23) beeinflußt.

9. Federbein nach Anspruch 8, dadurch gekennzeichnet, daß der erste Abstand (78) die erste Verbindung zwischen zwei Druckräumen (21, 23) und ein zweiter Abstand (79) zwischen dem Schiebeteil (40) und der jeweils anderen Anschlagstelle (59) eine zweite Verbindung zwischen zwei Druckräumen (22, 23) beeinflußt.

10. Federbein nach Anspruch 9, dadurch gekennzeichnet, daß die erste Verbindung zwischen einem ersten (21) und einem dritten Druckraum (23) verläuft und die zweite Verbindung zwischen einem zweiten (22) und dem dritten Druckraum (23) verläuft.

11. Federbein nach einem der vorhergehenden Ansprüche, dadurch gekennzeichnet, daß eine der Zylindergruppen (4) mindestens ein Zylinderrohr (8) umfaßt.

12. Federbein nach Anspruch 11, dadurch gekennzeichnet, daß die jeweils andere Zylindergruppe (6) mindestens einen Kolben (16) umfaßt.

13. Federbein nach Anspruch 11 oder 12, dadurch gekennzeichnet, daß die jeweils andere Zylindergruppe (6) mindestens eine Kolbenstange (14) umfaßt.

# FIG.1

FIG. 2

FIG.3